# EUROPEAN PATENT APPLICATION

(11) **EP 4 574 909 A1**
(43) Date of publication of application: **25.06.2025**
(21) Application number: 23218267.5
(22) Date of filing: 19.12.2023
(51) Int. Cl.: C08L 83/04, C09D 183/04, C09J 183/04

(54) **RTV-1 SILICONE ADHESIVE WITH IMPROVED STORAGE STABILITY AND PUMPABILITY**

(71) Applicant: Sika Technology AG, 6340 Baar (CH)
(72) Inventor: SUEN, Warren Wu, Long Branch, 07740 (US)
(74) Representative: Sika Patent Attorneys

(57) **Abstract**

The invention relates to one-component moisture-curable silicone composition comprising at least one crosslinkable polydiorganosiloxane having alkoxysilane end groups, at least one condensation catalyst, at least one crosslinker having alkoxysilane groups, preferably at least one non-reactive polydiorganosiloxane plasticizer, optionally further ingredients, between 0.01 wt.-% and 2.0 wt.-%, preferably between 0.1 wt.-% and 1 wt.-%, based on the total composition, of at least one radical scavenger, characterized in that said radical scavenger is selected from hindered amine light stabilizers that do not contain an N-H group in their molecular structure.

The one-component composition is shows superior storage stability and pumpability and is suitable, for example, as industrial adhesive.

## Description

### Technical field

The invention relates to a one-component moisture-curable silicone composition, to a method for bonding or joining with the composition, and to the use thereof.

### Prior art

Silicones are known compositions that have long been used as adhesives or sealants. Such silicones can be designed as one- or two-component silicone formulations and contain as main components a polyorganosiloxane and a crosslinker. A distinction is made between cold-curing RTV silicones (RTV = room-temperature vulcanizing) and hot-crosslinking HTV silicones (HTV = high-temperature vulcanizing), each of which rely on their individual curing mechanisms. One- and two-component RTV silicones are also referred to respectively as RTV-1 silicones and RTV-2 silicones.

RTV-1 silicones have long been known. It is likewise known that formulations of this kind can be cured on the basis of so-called neutral crosslinking. Neutral crosslinking systems classically release oxime compounds, which have an odor that is perceived as very unpleasant and are harmful to health. RTV-1 silicones can alternatively be formulated with crosslinkers containing alkoxy groups. The crosslinking elimination products are then alcohols, which have a considerably less unpleasant odor. The crosslinkers used generally comprise oligomeric functional silicones, as well as monomeric or oligomeric silanes with alkoxy functional groups.

In contrast to adhesives and sealants based on organic polymers, such as acrylics, polyurethanes, or silane-terminated organic polymers, silicones show superior resistance against degradation, for example caused by oxidative stress, UV irradiation, or thermal influence. This is the reason why silicones, unlike polyurethanes or compositions based on silane-terminated organic polymers, hardly ever are compounded using UV- or oxidation stabilizers, since the polydiorganosiloxane chain of silicone polymers is very resistant against chemical or physical degradation. The only exceptions are special silicone compositions for applications where environmental durability is a critical requirement, such as for construction and fenestration applications where weathering from constant exposures to variations in external temperature, humidity, and UV light are present.

RTV-1 silicones however, like all one-component reactive compositions, intrinsically have issues with storage stability. Since all reactive ingredients are stored within one container, only lacking water to cure, there are commonly issues with silicones starting to cure over time within their package, since many ingredients such as fillers commonly contain trace amounts of water even when dried carefully. One other source of the moisture is coming from the moisture ingression from external environment. Overtime, especially under elevated temperature conditions, RTV-1 silicone formulations containing fillers often gradually increase in viscosity due to initiation of crosslinking reactions caused by trace amounts of water. While it is possible to mitigate these effects by addition of drying agents such as highly reactive organosilanes or molecular sieves, these reactions can hardly be fully suppressed, which limits the shelf life of RTV-1 silicones in general. Furthermore, addition of large amounts of silane or solid drying agents influences the mechanical properties of the cured silicone composition, which restricts this solution in some applications.

Another problem that RTV-1 silicones often have is their relatively low pumpability, as they intrinsically possess a relatively high viscosity and limited shear-thinning properties. This is an issue that has become more relevant recently, as many application processes such as assembly operations in industry increasingly rely on automatic application involving pumping of the adhesive compositions. Pumpability of RTV-1 compositions can be improved by adding low viscous plasticizers or extenders to the formulation, or by reducing the content of solid ingredients such as fillers. However, this again severely influences the final mechanical properties of the cured material and reduces, for example, mechanical strength or toughness. Especially in industrial assembly operations, however, excellent mechanical properties are of key importance in the silicone adhesive, and thus such formulation adaptations are often not viable.

There is therefore a need for an RTV-1 silicone composition that does not have the disadvantages mentioned just above, but instead shows improved storage stability even under elevated temperature conditions and that furthermore exhibits an improved pumpability without compromising its mechanical performance, thus making it better suitable for industrial assembly operations.

### Summary of the invention

It is therefore an object of the present invention to provide a one-component moisture-curable silicone formulation that shows an improved storage stability and improved pumpability and allowing for full formulation freedom to establish desired mechanical properties after curing.

It was surprisingly found that adding between 0.01 wt.-% and 2.0 wt.-%, preferably between 0.1 wt.-% and 1 wt.-%, based on the total composition, of at least one radical scavenger that is selected from hindered amine light stabilizers that do not contain an N-H group in their molecular structure to an RTV-1 silicone composition significantly improves the storage stability of said composition, as expressed by an inhibition of viscosity increase over time or under heat influence in the closed container. This effect can even be achieved when no chemical or physical drying agents are added to the composition, such as calcium oxide, vinyltrimethoxysilane, or molecular sieves. Furthermore, it was surprisingly found that such additives additionally improve pumpability (extrudability) of RTV-1 compositions, even when added in small amounts of, e.g., 1% by weight. Both of these effects are highly unexpected, but significantly improve the suitability of corresponding RTV-1 composition as industrial assembly adhesives or for any other use where high storage stability and improved pumpability are desired.

Further aspects of the invention are the subject of further independent claims. Particularly preferred embodiments of the invention are the subject of the dependent claims.

### Way of executing the invention

The present invention relates to one-component moisture-curable silicone composition comprising
a) at least one crosslinkable polydiorganosiloxane **P** having alkoxysilane end groups;
b) at least one condensation catalyst **K;**
c) at least one crosslinker **V** having alkoxysilane groups;
d) preferably at least one non-reactive polydiorganosiloxane plasticizer **PL;**
e) optionally further ingredients;
f) between 0.01 wt.-% and 2.0 wt.-%, preferably between 0.1 wt.-% and 1 wt.-%, based on the total composition, of at least one radical scavenger **RS;**
characterized in that said radical scavenger **RS** is selected from hindered amine light stabilizers that do not contain an N-H group in their molecular structure.

Substance names beginning with "poly", for example polydimethylsiloxane, refer in the present document to substances formally containing two or more of the functional groups that occur in their name, for example dimethylsiloxane groups, per molecule.

The term "polymer" in the present document firstly encompasses a collective of macromolecules that are chemically uniform but differ in relation to degree of polymerization, molar mass, and chain length, said collective having been prepared by a "poly" reaction (polymerization, polyaddition, polycondensation). The term secondly also encompasses derivatives of such a collective of macromolecules from "poly" reactions, i.e. compounds that have been obtained by reactions, for example additions or substitutions, of functional groups on defined macromolecules and that may be chemically uniform or chemically nonuniform. The term further encompasses so-called prepolymers too, i.e. reactive oligomeric initial adducts, the functional groups of which are involved in the formation of macromolecules.

"Molecular weight" refers to the molar mass (in g/mol) of a molecule or a molecule residue. "Average molecular weight" refers to the number-average molecular weight (Mₙ) of an oligomeric or polymeric mixture of molecules or molecule residues. It is typically determined by gel-permeation chromatography (GPC) against polydimethylsiloxane as standard.

The term "viscosity" refers to the dynamic viscosity or shear viscosity, which is defined by the ratio between the shear stress and the shear rate (speed gradient) and is determined as described in DIN EN ISO 3219. The measurement can be carried out at 25°C using an MCR101 cone-plate viscometer from Anton Paar, Austria, with a type CP 25-1 cone. Unless otherwise stated, the reported viscosity values relate to a shear rate of 0.5 s⁻¹.

A substance or composition is referred to as "storage-stable" or "storable" when it can be stored at room temperature in a suitable container over a prolonged period, typically over at least 3 months up to 6 months or more, without this storage resulting in any change in its application or use properties to an extent relevant to its use.

The terms "mass" and "weight" are used synonymously in this document. Thus a "percentage by weight" (% by weight) refers to a percentage mass fraction that, unless otherwise stated, relates to the mass (the weight) of the total composition or, depending on the context, of the entire molecule.

"Room temperature" refers to a temperature of 23°C.

All industry standards and official standards mentioned in this document, unless otherwise stated, relate to the version valid at the time of filing of the first application.

In this document, a silane is a silicon compound that consists of a silicon atom and 4 functional groups or atoms attached to it. A siloxane is a compound that includes at least two silicon atoms bridged by an oxygen atom. Siloxanes are thus condensation products of silanes.

An organosilane is a monomeric silicon compound having at least one non-hydrolyzable group that is linked via a Si-C bond. An organosiloxane is a compound obtainable from the condensation of at least two organosilanes.

An alkoxysilane is a monomeric silane having at least one alkoxy group attached to the Si atom. A trialkoxysilane and a tetraalkoxysilane are a monomeric silane having respectively three and four alkoxy groups that are attached to the Si atom. The alkoxy group can be, for example, a C₁-C₈ alkoxy group. An alkoxysiloxane is a compound obtainable from the condensation of at least two alkoxysilanes, but still has at least one alkoxy group after the condensation.

An organoalkoxysilane is a monomeric silane having at least one alkoxy group and at least one non-hydrolyzable group that is linked via a Si-C bond. An organoalkoxysiloxane is a compound obtainable from the condensation of at least two organoalkoxysilanes or at least one alkoxysilane and an organoalkoxysilane, but still has at least one alkoxy group after the condensation.

The one-component moisture-curable silicone composition is in particular an RTV-1 silicone. Such RTV-1 silicones cure at room temperature through contact with water, generally through contact with atmospheric humidity in the air.

### Crosslinkable polydiorganosiloxane P

The one-component moisture-curable silicone composition comprises firstly one or more crosslinkable polydiorganosiloxanes **P** having alkoxysilane end groups. Such crosslinkable polydiorganosiloxanes are well known to the person skilled in the art. The crosslinkable polydiorganosiloxanes initially have alkoxy groups attached to silicon, which can hydrolyze to silanol groups under influence of moisture, through which crosslinking is possible. These alkoxysilane groups are located at the end of the polydiorganosioxane chain. Such polydiorganosiloxanes having terminal silanol groups are also referred to as α,ω-functional polydiorganosiloxanes.

The alkoxy groups on the polydiorganosiloxanes **P,** or, after hydrolysis the silanol groups formed therefrom, can react with the alkoxy groups or, after hydrolysis the silanol groups formed therefrom, of the crosslinker **V,** or other polydiorganosiloxanes **P** in the composition to form a bond. This bond is formed in a condensation reaction. This generally results in the release of byproducts such as water and/or alcohol. It is possible and even probable that an alkoxysilane may first hydrolyze to a silanol before the condensation takes place. These reactions take place preferentially and much more efficiently under the influence of a condensation catalyst **K,** as it is also contained in the composition of the invention. This is described further below.

The viscosity of the polydiorganosiloxanes **P** may vary within wide ranges depending on the intended use. The polydiorganylsiloxane **P** used in accordance with the invention can, for example, have a viscosity of 10 to 500'000 mPa s, preferably 5'000 to 400'000 mPa s, and particularly preferably 10'000 to 320'000 mPa s, at a temperature of 23°C.

The polydiorganosiloxane **P** is preferably a linear polydiorganosiloxane of the formula (I), 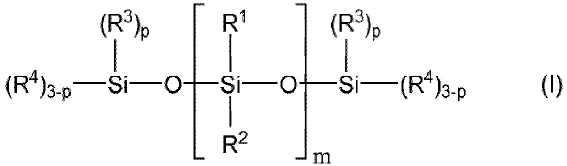
where the radicals R¹, R², and R³ are independently linear or branched, monovalent hydrocarbyl radicals that have 1 to 12 carbon atoms and optionally include one or more heteroatoms, and optionally one or more C-C multiple bonds and/or optionally cycloaliphatic and/or aromatic components;
R⁴ is an alkoxy group having 1 to 6 carbon atoms;
the index p has a value of 0, 1 or 2; and
the index m is chosen such that the polydiorganosiloxane **P,** at a temperature of 23°C, has a viscosity from 1'000 to 350'000 mPa s, preferably from 5'000 to 150'000 mPa s, in particular from 50'000 to 100'000 mPa s, measured in accordance with DIN EN ISO 3219.

In formula (I), the radicals R¹ and R² are preferably independently selected from alkyl groups having 1 to 5, in particular 1 to 3, carbon atoms, such as propyl, ethyl, and methyl, methyl being particularly preferred, wherein some of the alkyl groups, in particular methyl, may be optionally replaced by other groups such as vinyl, phenyl, or 3,3,3-trifluoropropyl. In formula (I), the radical R³, if present, is preferably independently selected from phenyl, vinyl or methyl groups.

The radicals R¹, R², and R³ in formula (I) are particularly preferably methyl groups. In the same or other preferred embodiments, radicals R⁴ are methoxy groups.

The index m in formula (I) is chosen such that the polydiorganosiloxane has the viscosity indicated above. The index m in the formula (I) may, for example, be in the range from 10 to 5'000 and preferably 100 to 1'500.

Suitable polydiorganosiloxanes, as shown in formula (I) are known and commercially available. The preparation of such polydiorganosiloxanes is also carried out in a known manner, as described, for example, in EP0658588.

In preferred embodiments, the composition comprises between 40 wt.-% and 70 wt.-%, preferably between 50 wt.-% and 60 wt.-%, of said crosslinkable polydiorganosiloxane **P,** based on the total composition.

### Condensation catalyst K

The composition of the invention further comprises at least condensation catalyst **K.** These are used for catalysis of the condensation/crosslinking that takes place between the crosslinkable polydiorganosiloxanes **P** and the crosslinker **V** (and further silane-functional constituents, if present) in the presence of moisture/water, and/or for catalysis of the preceding hydrolysis to silanols in the case of alkoxysilane groups.

The condensation catalyst **K** can be any conventional catalyst used for these RTV silicone systems, preferably a metal catalyst. Metal catalysts can in particular be compounds or complexes of elements of groups 1, 2, 4, 12, 14 or 15 of the periodic table of elements, preferably groups 4 or 14. The condensation catalyst **K** is preferably an organotin compound or a titanate or a zirconate or a bismuthate or an aluminate. The condensation catalyst is particularly preferably an organotin compound.

Suitable condensation catalysts **K** are commercially available. It is also possible and in certain cases even preferred to use mixtures of different catalysts as condensation catalyst **K.**

Suitable titanates are commercially available, for example, under the trade names Tyzoh^{®} AA-105, PITA, TnBT, TPT, TOT, IAM, IBAY from Dorf Ketal, India.

Suitable zirconates are commercially available, for example, under the trade names Tyzoh^{®} NBZ, NPZ, TEAZ, 212, 215, 217, 223 from Dorf Ketal or under the trade names K-Kat^{®} 4205 or K-Kat^{®} XC-6212 from King Industries.

Suitable bismuthates are commercially available for example under the brand names Borchi^{®} Kat (Borchers GmbH) or Tegokat^{®} (Goldschmidt TIB GmbH), Neobi^{®} 200, Shepherd, Coscat^{®}, Caschem.

Other suitable bismuthates are available, for example, under the trade names K-Kat^{®} 348 and K-Kat^{®} XC-8203 from King Industries.

A suitable aluminate is available, for example, under the trade name K-Kat^{®} 5218 from King Industries.

Amidines and guanidines, in particular those described in WO 2016/207156, in WO 2013/087680, and in WO 2015/193208, are also suitable as condensation catalysts **K.**

The condensation catalyst **K** is in particular an organotin compound. Preferred organotin compounds are dialkyltin compounds, selected for example from dimethyltin di-2-ethylhexanoate, dimethyltin dilaurate, di-n-butyltin diacetate, di-n-butyltin di-2-ethylhexanoate, di-n-butyltin dicaprylate, din-butyltin di-2,2-dimethyloctanoate, di-n-butyltin dilaurate, di-n-butyltin distearate, di-n-butyltin dimaleate, di-n-butyltin dioleate, di-n-octyltin di-2-ethylhexanoate, di-n-octyltin di-2,2-dimethyloctanoate, di-n-octyltin dimaleate, di-n-octyltin dilaurate, di-n-butyltin oxide, and di-n-octyltin oxide.

In preferred embodiments, the composition comprises between 0.001 wt.-% and 0.5 wt.-%, preferably between 0.05 wt.-% and 0.25 wt.-%, of said condensation catalyst **K,** based on the total composition.

### Crosslinker V having alkoxysilane groups

The composition of the invention further comprises at least one organoalkoxysilane or organoalkoxysiloxane crosslinker **V** that has alkoxysilane groups, preferably between 2 and 3 alkoxysilane groups. This means the crosslinker **V** should have at least one silane group that has at least 2 alkoxy substituents.

The crosslinker **V** has at least 2 alkoxysilane groups, preferably at least 3 or more (only in the case of a siloxane, i.e. of an oligomeric silane).

Suitable alkoxy groups are in particular methoxy, ethoxy, butoxy, and propoxy groups. Preference is given to methoxy and ethoxy groups.

In addition, the crosslinker **V** preferably has 1, 2 or more (only in the case of oligomeric siloxanes) non-hydrolyzable functional groups, in particular alkyl groups or alkenyl groups or aryl groups, which all may contain heteroatoms.

In case of alkyl groups, the non-hydrolyzable functional groups are preferably selected from methyl, ethyl, vinyl, n-propyl, cyclopentyl, phenyl, cyclohexyl, n-octyl, isooctyl, and hexadecyl.

In case of aryl groups, the non-hydrolyzable functional groups are preferably phenyl groups.

It is also possible to use tetraalkoxysilanes as crosslinker **V,** in particular tetraethoxysilane and tetra-n-propoxysilane.

Furthermore, the non-hydrolyzable functional groups may also contain heteroatoms, in particular selected from O, N, S, and Si. Examples of such groups containing heteroatoms are aminoalkyl groups, (meth)acryloxyalkyl groups, glycidoxyalkyl groups, and thioalkyl groups.

Specific examples of monomeric organoalkoxysilane crosslinkers **V** are methyltrimethoxysilane, ethyltrimethoxysilane, vinyltrimethoxysilane, phenyltrimethoxysilane, propyltrimethoxysilane, isooctyltrimethoxysilane, methylvinyldimethoxysilane or the corresponding compounds in which the methoxy group is replaced by ethoxy or propoxy, such as methyltriethoxysilane, vinyltriethoxysilane, phenyltriethoxysilane, methyltripropoxysilane, and phenyltripropoxysilane.

The oligomeric organoalkoxysiloxane crosslinkers **V** are condensation products of one or more such monomeric silane crosslinkers, optionally with the use of further silanes such as tetraalkoxysilanes. Oligomeric siloxanes of this kind are known and are commercially available, for example under the Dynasylan^{®} 6490 trade names from Evonik Degussa GmbH.

Oligomers of functional silanes are three-dimensional compounds with complex structures made up of tetrahedral silane/siloxane units. The oligomeric siloxane may be formed, for example, from hydrolysis and condensation of one or more identical or different monomeric silanes.

A siloxane containing alkoxy groups may be linear, cyclic or three-dimensionally branched. It is preferably a siloxane containing oligomeric alkoxy groups.

An oligomeric siloxane of this kind contains functional groups that originate from the monomeric silanes used for the synthesis thereof. For example, an initial condensation of two tetramethoxysilane molecules results in a dimer containing six functional groups, with one functional group in each molecule forming the linkage through condensation. As already set out, the structure of the oligomers formed may be complex. The number of functional groups in the oligomer can vary according to the degree of condensation, nature of condensation, and monomeric silanes used, but is at least 2, but generally greater, for example 4 or more.

The degree of condensation of the oligomeric siloxane, i.e. the number of monomeric silanes condensed with one another, may vary within wide ranges according to the end use, but may, for example, be within the range from 2 to 200 and preferably from 4 to 50. It will be apparent that the degree of condensation, especially in the case of higher degrees of condensation, is frequently only an average.

The degree of condensation relates to the number of monomeric alkoxysilanes in the siloxane that are condensed with one another and can also be referred to as the degree of polymerization. The average degree of condensation of a siloxane containing alkoxy groups is at least 5, preferably at least 6, and more preferably at least 7. The average degree of condensation of the siloxane containing alkoxy groups may vary within wide ranges according to the end use and may preferably be, for example, not more than 15 and more preferably not more than 12. It will be apparent that the degree of condensation, especially in the case of higher degrees of condensation, is often an average, i.e. the siloxane is generally a mixture of compounds of varying degrees of condensation.

The average degree of condensation here means the average degree of condensation based on the number average. As is known to the person skilled in the art, this can be determined by measuring the siloxane by ²⁹Si NMR spectroscopy and evaluating the spectrum obtained. The measurement and determination can be carried out according to the details provided by J. Zhang et al, J Sol-Gel Sci Technol, 2010, 56, 197-202.

In preferred embodiment, the composition of the invention, crosslinker **V** comprises at least one organoalkoxysilane or organoalkoxysiloxane that contains at least one aminoalkyl group having a primary and/or secondary amino group.

Monomeric such organoalkoxysilanes may contain 1 or 2 aminoalkyl groups and 2 or 3 alkoxy groups per silicon atom; oligomeric such organoalkoxysiloxanes may also have more or fewer amino groups.

The addition of the organoalkoxysilane or organoalkoxysiloxane having aminoalkyl groups results not only in the composition curing more rapidly as a consequence of the amino group having a co-catalytic effect, but also improves adhesion on many substrates.

Specific examples of monomeric organoalkoxysilanes having aminoalkyl groups as crosslinker **V** are 3-aminopropyltrimethoxysilane and 2-aminoethyl-3-aminopropyltrimethoxysilane and the corresponding compounds in which the methoxy group is replaced by ethoxy or propoxy, such as 3-aminopropyltriethoxysilane. Further examples are bis(trimethoxysilylpropyl)amine and N-(n-butyl)-3-aminopropyltrimethoxysilane, and also their analogs having ethoxysilane groups instead of methoxysilane groups.

Specific examples of suitable oligomeric organoalkoxysiloxanes having aminoalkyl groups as crosslinker **V** are those that are commercially available for example under the trade names Dynasylan^{®} 1146 from Evonik Degussa GmbH or Hansa Care 8038 from CHT GmbH or Wacker^{®} Crosslinker ME 60 from Wacker Chemie AG.

Crosslinkers **V** that are alkoxysilanes containing organic functional groups may have the additional advantage that they act as adhesion promoters and improve adhesion on various substrates. The functional group is, for example, an aminopropyl, glycidoxypropyl, (meth)acryloxalkyl, or mercaptopropyl group. Preference is given to amino-functional groups. The alkoxy groups of such silanes are usually a methoxy or ethoxy group. Particular preference is given to aminopropyltrimethoxysilane, 3-aminopropyltriethoxysilane, 3-(2-aminoethyl)aminopropyltriethoxysilane and 3-mercaptopropyltriethoxysilane. It is also possible to use a mixture of adhesion promoters.

Further suitable adhesion promoters are, for example, also amino-functional alkylsilsesquioxanes such as amino-functional methylsilsesquioxane or amino-functional propylsilsesquioxane, alkoxylated alkyleneamines, especially ethoxylated and/or propoxylated alkylenediamines, and further, especially substituted, oligomers, polymers or copolymers based on polyalkylene glycols.

The organoalkoxysilane or organoalkoxysiloxane crosslinker **V** used for the silicone composition of the invention may of course also be any mixture of the abovementioned silanes and/or siloxanes.

All silanes and siloxanes used in the context of this invention are preferably free of oxime groups. Oxime groups include aldoxime groups and ketoxime groups. Such oxime groups are in the prior art usually present in the crosslinker of one-component moisture-curable silicone formulations when faster curing through the addition of water is desirable. As explained above, the oxime compounds pose higher environmental hazards; also, the presence of such oxime groups means that oximes having an unpleasant odor are released during curing.

In preferred embodiments, the composition comprises between 0.5 wt.-% and 10 wt.-%, preferably between 1 wt.-% and 5 wt.-%, of said crosslinker **V,** based on the total composition.

In the same or different preferred embodiments, the composition comprises between 0.1 wt.-% and 5 wt.-%, preferably between 0.5 wt.-% and 3 wt.-% of aminofunctional such crosslinkers **V,** based on the total composition.

### Plasticizer PL

The composition of the invention optionally but preferably contains at least one non-reactive polydiorganosiloxane plasticizer **PL.**

Such silicone plasticizers are known and widely used in the field. They normally consist of unreactive silicone oils, being polymers with the same polydiorganosiloxane, in particular polydimethylsiloxane, backbone but different end groups as polymer **P.**

The use of plasticizers **PL** offers the advantage of facilitated compounding of the composition, especially when fillers are used, and it may improve application properties and mechanical properties after curing.

A preferred example of polydimethylsiloxane plasticizers **PL** that may optionally be used are trialkylsilyl-terminated polydimethylsiloxanes, the trialkylsilyl-terminated polydimethylsiloxanes preferably having a viscosity at 23°C in the range from 1 to 10'000 mPa.s. For example, it is also possible to use trimethylsilyl-terminated polydimethylsiloxanes in which some of the methyl groups have been replaced by other organic groups such as phenyl, vinyl or trifluoropropyl groups. The polydiorganosiloxane plasticizer **PL** may also be monofunctional, i.e. reactive at one end, for example via a hydroxy end group. Certain hydrocarbons may likewise be used as plasticizers or extenders, additional to or instead of polydiorganosiloxane plasticizers.

In preferred embodiments, the composition comprises between 5 wt.-% and 25 wt.-%, preferably between 10 wt.-% and 20 wt.-%, of said polydiorganosiloxane plasticizer **PL,** based on the total composition.

### Radical scavenger RS

The composition of the invention further comprises between 0.01 wt.-% and 2.0 wt.-%, preferably between 0.1 wt.-% and 1 wt.-%, based on the total composition, of at least one radical scavenger **RS**, wherein said radical scavenger **RS** is selected from hindered amine light stabilizers that do not contain an N-H group in their molecular structure.

Hindered amine light stabilizers, often abbreviated "HALS", are well known in the field of adhesives and sealants. However, they are hardly ever used in silicones, but rather in curable compositions based on chemically and physically more sensitive organic polymers such as polyurethanes, silane-functional organic polymers, or poly(meth)acrylates. Furthermore, they are used commonly in thermoplastic compositions such as polyolefins.

These HALS compounds are typically derivatives of tetramethylpiperidine (2,2,6,6-tetramethylpiperidine) and are primarily used to protect the polymers from the effects of photo-oxidation; as opposed to other forms of polymer degradation such as ozonolysis. They are also increasingly being used as thermal stabilizers for plastics, particularly for low and moderate level of heat, however during the high temperature processing of polymers (e.g. injection molding) they remain less effective than traditional phenolic antioxidants.

There are different types of HALS. Most common are so-called "basic HALS", which contain a N-H group on their tetramethylpiperidine moiety. However, there are also so-called "non-basic HALS", in which the N-H group has been converted to a N-R group, for example by acylation or by alkylation or by alkoxylation. HALS types that were alkoxylated are also called "NOR-HALS", as the N-H group was converted to a N-OR group.

For the present invention, it has surprisingly been found that only non-basic types of HALS impart the inventive effect. Thus, the radical scavenger **RS** must be selected from hindered amine light stabilizers that do not contain an N-H group in their molecular structure.

Suitable radical scavengers **RS** are thus for example hindered amine light stabilizers that have at least one acylated, alkylated, or alkoxylated N-H group, and no remaining N-H groups.

Thus, in preferred embodiments, said radical scavenger **RS** contains at least one N-alkylated or N-acylated or N-alkoxylated 2,2,6,6-tetramethylpiperidine group, preferably an N-alkylated 2,2,6,6-tetramethylpiperidine group.

Examples of suitable radical scavenger **RS** having an acylated 2,2,6,6-tetramethylpiperidin group are, for example, Hostavin^{®} 3123 LIQ (Clariant) or Hostavin^{®} 3058 LIQ (Clariant).

An example of a suitable radical scavenger **RS** having an ethoxylated 2,2,6,6-tetramethylpiperidin group (NOR-HALS) is, for example, Tinuvin^{®} 123 (BASF). An example of a suitable radical scavenger **RS** having an alkylated 2,2,6,6-tetramethylpiperidin group is, for example, Tinuvin^{®} 249 (BASF).

The composition preferably comprises between 0.01 wt.-% and 2.0 wt.-%, in particular between 0.1 wt.-% and 1.5 wt.-%, preferably between 0.25 wt.-% and 1 wt.-%, based on the total composition, of said at least one radical scavenger **RS**. Already low amounts of radical scavenger **RS** lead to remarkable effects, while excessive amounts (for example more than 2 wt.-%) do not further improve the properties, but might lead to incompatibility with the silicone matrix.

The composition of the invention may optionally also comprise further constituents such as those customary in one-component moisture-curable silicone formulations. Examples of such additives are fillers, OH-terminated polydimethylsiloxanes, plasticizers, extenders, adhesion promoters, curing accelerators, OH scavengers, drying agents, wetting aids, rheology modifiers, thixotropic agents, processing aids, biocides, UV stabilizers, heat stabilizers, flame retardants, color pigments, odorants, antistatic agents, and/or emulsifiers.

Preferably, the silicone formulation optionally includes one or more fillers. The fillers may influence, for example, both the rheological properties of the uncured formulation and the mechanical properties and surface characteristics of the cured formulation. It may be advantageous to use a mixture of different fillers.

Examples of suitable fillers are inorganic or organic fillers, such as natural, ground or precipitated calcium carbonates or chalks, which are optionally surface-treated, for example with fatty acids, surface-treated silicas, in particular fumed silicas, aluminum hydroxides such as aluminum trihydroxide, carbon black, in particular industrial carbon blacks, barium sulfate, dolomite, silicas, kaolin, hollow beads, quartz, calcined aluminum oxides, aluminum silicates, magnesium aluminum silicates, zirconium silicates, cristobalite flour, diatomaceous earths, micas, titanium oxides, zirconium oxides, gypsum, graphite, carbon fibers, zeolites or glass fibers, the surface of which is optionally treated with a hydrophobizing agent.

In preferred embodiments, the composition according to the invention contains a silica, in particular a fumed (pyrogenic) silica, preferably a hydrophilic fumed silica. A (hydrophilic) silica is a solid that consists predominantly of Si(-O)₄ units but may also have surface silanol groups and has a three-dimensional, normally porous structure. The expression "hydrophilic" indicates that the silica has not been surface-treated with hydrophobizing additives. Hydrophobic silicas, on the other hand, are surface-coated by hydrophobic agents, such as silanes having alkyl groups.

Hydrophilic, i.e., untreated, silicas are well known as fillers and thickeners to the person skilled in the art. They can be produced, for example, via precipitation reactions (precipitated silica) or pyrolysis processes (fumed silica).

Fumed silica is preferred for the invention, since it has a lower water content as a consequence of the production process and does not need to be dried. Precipitated silicas are, however, also suitable.

Particularly preferred are silicas having a BET surface area from 50 to 300 m²/g, preferably from 100 to 255 m²/g.

The composition preferably comprises between 1 wt.-% and 10 wt.-%, in particular between 2.5 wt.-% and 7.5 wt.-%, preferably between 3 wt.-% and 6 wt.-%, based on the total composition, of silica, in particular fumed silica, more preferably fumed hydrophilic silica.

In preferred embodiments, the composition according to the invention contains calcium carbonate (chalk) as filler, in particular a ground calcium carbonate. It is possible to use precipitated calcium carbonates, but those often contain significant amounts of water due to their production process. Thus, ground calcium carbonate, in particular from natural resources (chalk, marble) is preferred. The calcium carbonate may be surface-coated, e.g., by stearates or silanes. Surface-coated calcium carbonate is often easier to compound within the composition. However, there are no specific limitations regarding the calcium carbonate filler.

The composition preferably comprises between 10 wt.-% and 50 wt.-%, in particular between 15 wt.-% and 40 wt.-%, preferably between 20 wt.-% and 30 wt.-%, based on the total composition, of calcium carbonate fillers.

The total amount of fillers of any kind within the composition preferably is in the range of between 20 wt.-% and 60 wt.-%, preferably between 25 wt.-% and 50 wt.-%, based on the total composition, of fillers.

The constituents of the composition of the invention may be mixed with one another in a customary manner, for example with the aid of a suitable mixing unit, such as a mechanical or planetary mixer.

The composition of the invention is preferably free of oxime compounds.

In some preferred embodiments, the composition of the invention does not contain any chemical or physical drying agents. In particular, the composition in some preferred embodiments does not contain molecular sieves, calcium oxide, or vinyltrimethoxysilane.

The invention further provides for a method for improving storage stability and pumpability of a one-component moisture-curable silicone composition, comprising the step of adding between 0.01 wt.-% and 2.0 wt.-%, preferably between 0.1 wt.-% and 1.0 wt.-%, based on the total composition, of at least one radical scavenger **RS** which is selected from hindered amine light stabilizers that do not contain an N-H group in their molecular structure, to a one-component moisture-curable silicone composition comprising
a) at least one crosslinkable polydiorganosiloxane **P** having alkoxysilane end groups;
b) at least one condensation catalyst **K;**
c) at least one crosslinker **V** having alkoxysilane groups;
d) preferably at least one non-reactive polydiorganosiloxane plasticizer **PL;**
e) optionally further ingredients.

All preferred embodiments discussed in connection with the composition according to the invention also apply to the method above.

The composition of the invention may be used as an adhesive, coating or sealant in a method for bonding or joining substrates. The method of the invention comprises
a) the application of the composition to a substrate and contacting of the mixture applied to the substrate with a further substrate in order to obtain an adhesive bond between the substrates, or the introduction of the composition into a gap between two substrates in order to obtain a join between the substrates, and
b) the curing of the mixture,
wherein step b) preferably takes place through the action of atmospheric moisture.

The composition of the invention is stored in an airtight container, for example a cartridge, a bag or a hobbock, and is thus storage stable. In order to ensure good storage stability, the silicone composition of the invention should be substantially free of water when stored in its container. The silicone composition of the invention preferably comprises less than 1.0% by weight of water, preferably less than 0.5% by weight of water, more preferably less than 0.1% by weight of water, based on the total composition. A low water content may in particular be achieved by pre-drying the constituents of the invention, in particular the fillers, if present. Heat and/or vacuum treatments have been found to be suitable therefor. These are known to the person skilled in the art of silicone formulation.

For application, the container is opened, and the composition then immediately applied to or introduced onto the substrate or into the bonded joint using a hand-held device, for example a gun, or using an automated application device. The composition of the present invention is especially suitable for automated application using pumps.

Application to a substrate or introduction into a gap between substrates according to step a) of the method mentioned above may be carried out in a customary manner, for example manually or in an automated process with the aid of robots. During bonding, the substrate provided with the mixture is contacted with a further substrate, optionally under pressure, in order to obtain an adhesive bond between the substrates. The mixture is then left to cure in step b), usually at room temperature, in order to achieve the bonding or joining of the substrates. In this way, the bonded or joined substrates of the invention are obtained with the cured composition as adhesive or sealant material.

The substrates to be bonded, coated, potted or joined may be of the same material or a different material. All customary materials may be bonded, coated, potted or joined with the one-component composition of the invention. Preferred materials for bonding, sealing, coating, potting or joining are glass, metals, such as aluminum, copper, steel or stainless steel, wood, wood substrates with paint treatment or other treatment, concrete, mortar, building stones such as sandstone and sand-lime brick, asphalt, bitumen, plastics, such as polyolefins, PVC, polyvinyl fluoride, PET, polyamide, polycarbonate, polystyrene or polyacrylate, and composite materials such as CFRP.

The one-component composition of the invention may thus be used as an adhesive, sealing, coating, potting compound or sealant, for example in the following sectors: construction, the sanitary sector, the automotive sector, solar power, wind power, white goods, facade and window construction, electronics, and boat- and shipbuilding.

### Examples

Specific embodiments of the invention are described hereinbelow.

The chemicals that were used for the example compositions are listed in table 1 below.

**Table 1: Chemicals used.**

| **Name** | **Description** |
|---|---|
| Polymer P | Alkoxysilane-terminated, crosslinkable PDMS polymer having a viscosity of 80 Pa·s at 23°C (Wacker^{®} Polymer AL 100; Wacker Chemie) (polydiorganosiloxane **P**) |
| Plasticizer PL | α,ω-Bis(trimethylsilyl)-poly(dimethylsiloxane) having a viscosity of 1'000 mPa·s at 23°C (Wacker^{®} Plasticizer 1000; Wacker Chemie) (polydiorganosiloxane plasticizer **PL**) |
| Crosslinker V1 | Mixture of alkoxysilane with aminofunctional siloxane (Wacker^{®} Crosslinker ME 60; Wacker Chemie) (crosslinker **V**) |
| Crosslinker V2 | N-2-Aminoethyl-3-aminopropyltrimethoxysilane (crosslinker **V**) |
| Crosslinker V3 | Oligomeric diaminosilane (Dynasylan^{®} 1146; Evonik) (crosslinker **V**) |
| Silica | Hydrophilic fumed silica |
| Chalk | Ground, natural calcium carbonate filler (marble) |
| Irganox 1076 | Sterically hindered phenol (Irganox^{®} 1076; BASF) |
| Tinuvin 770 | Basic hindered amine stabilizer (Tinuvin^{®} 770; BASF) |
| Tinuvin 249 | Non-basic hindered amine stabilizer (Tinuvin^{®} 249; BASF) (radical scavenger **RS**) |
| Tinuvin 384-2 | Benzotriazole-based UV absorber (Tinuvin^{®} 384-2; BASF) |
| Tin catalyst | Dioctyl tin based catalyst (condensation catalyst **K**) |

The additives used in the comparative studies are further detailed in table 2, where their chemical structural formulae are shown.

**Table 2: Structural formulae of the additives used.**

| **Name** | **Molecule structural formula** |
|---|---|
| Irganox 1076 | 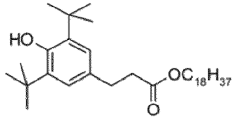 |
| Tinuvin 770 | 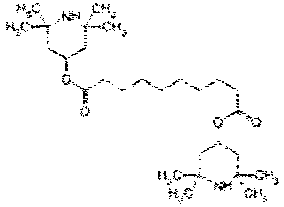 |
| Tinuvin 249 | 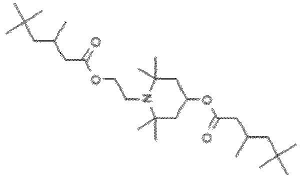 |
| Tinuvin 384-2 | 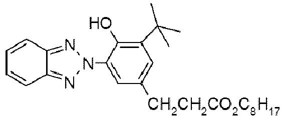 |

The proportions (wt.-%) of the constituents for the example compositions given in table 3 below were weighed out and mixed on a Hauschild SpeedMixer at 23°C and 50% RH for 20 s at 2000 rpm with application of vacuum. The mixtures obtained were stored in an airtight container at 23°C.

In addition, table 4 contains the summaries of the measurement results. All tests were carried out at 23°C and 50% RH (relative humidity).

### Test methods

**Viscosity** was determined at 25°C in accordance with DIN EN ISO 3219 using a MCR301 Rheometer from Anton Paar, Austria, with a type PP 25 spindle and a distance of 1 mm. The reported viscosity values relate to a shear rate of 0.89 s⁻¹. A first viscosity measurement was taken on freshly prepared samples stored for 24h at 23°C and 50% RH in closed cartridges. A second measurement was taken on samples that were stored for 1 week in closed cartridges in an oven at 70°C, before being stored again for 24h at 23°C and 50% RH. This second measurement was done to investigate the storage stability under thermal ageing conditions. Furthermore, the percentual increase in viscosity between the fresh sample and the thermally aged sample was determined. The larger the increase in viscosity between the two samples, the poorer the storage stability.

The pumpability properties ("**extrusion rate**") were determined according to ASTM D-5267 on freshly prepared samples stored for 24h at 23°C and 50% RH in closed cartridges. The indicated value (in g/min) is an average taken over 3 measurements. The higher the extrusion rate, the better the pumpability of the composition.

**Table 3: Example compositions. All numbers in wt.-%.**

| **Example** | **Z-1** (Ref.) | **Z-2** (Ref.) | **Z-3** (Ref.) | **Z-4** | **Z-5** (Ref.) |
|---|---|---|---|---|---|
| Polymer P | 58.0 | 57.5 | 57.5 | 57.5 | 57.5 |
| Plasticizer PL | 11.1 | 11.0 | 11.0 | 11.0 | 11.0 |
| Crosslinker V1 | 2.9 | 2.8 | 2.8 | 2.8 | 2.8 |
| Silica | 4.9 | 4.8 | 4.8 | 4.8 | 4.8 |
| Chalk | 21.0 | 20.8 | 20.8 | 20.8 | 20.8 |
| Irganox 1076 | - | 1.0 | - | - | - |
| Tinuvin 770 | - | - | 1.0 | - | - |
| Tinuvin 249 | - | - | - | 1.0 | - |
| Tinuvin 384-2 | - | - | - | - | 1.0 |
| Crosslinker V2 | 1.0 | 1.0 | 1.0 | 1.0 | 1.0 |
| Crosslinker V3 | 1.0 | 1.0 | 1.0 | 1.0 | 1.0 |
| Tin catalyst | 0.1 | 0.1 | 0.1 | 0.1 | 0.1 |
| *TOTAL* | *100.0* | *100.0* | *100.0* | *100.0* | *100.0* |

The test results are shown in table 4 below.

**Table 4: Example compositions. All numbers in wt.-%.**

| **Test** | **Z-1** (Ref.) | **Z-2** (Ref.) | **Z-3** (Ref.) | **Z-4** | **Z-5** (Ref.) |
|---|---|---|---|---|---|
| Viscosity fresh [Pa·s] | 785 | 751 | 833 | 790 | 749 |
| Viscosity after thermal ageing [Pa·s] | 1260 | 1060 | 1630 | 890 | 1120 |
| Viscosity increase | 66.2% | 41% | 96% | 12.7% | 49.5% |
| Extrusion rate [g/min] | 99.3 | 103.8 | 101.7 | 118.9 | 112.2 |

Table 4 shows that inventive example Z-4 shows a significantly lower increase in viscosity after thermal ageing, alongside with a significantly higher extrusion rate than both the reference example containing no additive (Z-1) and the reference examples containing additives not according to the invention (Z-2, Z-3, Z-5). This is very surprising, especially given the fact that some of the comparative additives are structurally very similar to the additive of Z-4 (see table 2).

## Claims

1. A one-component moisture-curable silicone composition comprising
a) at least one crosslinkable polydiorganosiloxane **P** having alkoxysilane end groups;
b) at least one condensation catalyst **K;**
c) at least one crosslinker **V** having alkoxysilane groups;
d) preferably at least one non-reactive polydiorganosiloxane plasticizer **PL;**
e) optionally further ingredients;
f) between 0.01 wt.-% and 2.0 wt.-%, preferably between 0.1 wt.-% and 1 wt.-%, based on the total composition, of at least one radical scavenger **RS**;
**characterized in that** said radical scavenger **RS** is selected from hindered amine light stabilizers that do not contain an N-H group in their molecular structure.

2. The one-component moisture-curable silicone composition as claimed in claim 1, **characterized in that** the polydiorganosiloxane **P** is a linear polydiorganosiloxane of the formula (I), 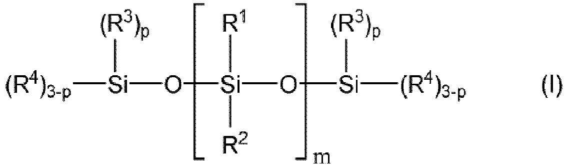
where the radicals R¹, R², and R³ are independently linear or branched, monovalent hydrocarbyl radicals that have 1 to 12 carbon atoms and optionally include one or more heteroatoms, and optionally one or more C-C multiple bonds and/or optionally cycloaliphatic and/or aromatic components;
R⁴ is an alkoxy group having 1 to 6 carbon atoms;
the index p has a value of 0, 1 or 2; and
the index m is chosen such that the polydiorganosiloxane **P,** at a temperature of 23°C, has a viscosity from 1000 to 350 000 mPa s, preferably from 5'000 to 150'000 mPa s, in particular from 50'000 to 100'000 mPa s, measured in accordance with DIN EN ISO 3219.

3. The one-component moisture-curable silicone composition as claimed in claim 2, **characterized in that** the radicals R¹, R², and R³ are methyl groups and/or said radicals R⁴ are methoxy groups.

4. The one-component moisture-curable silicone composition as claimed in any of the preceding claims, **characterized in that** the composition does not contain any chemical or physical drying agents.

5. The one-component moisture-curable silicone composition as claimed in any of the preceding claims, **characterized in that** said crosslinker **V** includes at least one organosilane having a primary and/or a secondary amino group.

6. The one-component moisture-curable silicone composition as claimed in any of the preceding claims, **characterized in that** the composition comprises between 40 wt.-% and 70 wt.-%, preferably between 50 wt.-% and 60 wt.-%, of said crosslinkable polydiorganosiloxane **P,** based on the total composition.

7. The one-component moisture-curable silicone composition as claimed in any of the preceding claims, **characterized in that** the composition furthermore comprises fillers, preferably selected from calcium carbonate and/or silica, in particular ground calcium carbonate and/or hydrophilic, preferably fumed, silica.

8. The one-component moisture-curable silicone composition as claimed in any of the preceding claims, **characterized in that** said condensation catalyst **K** is a compound of an element of groups 1, 2, 4, 12, 14, or 15 of the Periodic Table of the Elements, preferably a compound of groups 4 or 14, more preferably of titanium or tin, most preferably an organotin compound.

9. The one-component moisture-curable silicone composition as claimed in any of the preceding claims, **characterized in that** said radical scavenger **RS** contains at least one N-alkylated or N-acylated or N-alkoxylated 2,2,6,6-tetramethylpiperidine group, preferably an N-alkylated 2,2,6,6-tetramethylpiperidine group.

10. The one-component moisture-curable silicone composition as claimed in any of the preceding claims, **characterized in that** the composition additionally comprises further additives selected from OH-terminated polydimethylsiloxanes, plasticizers, adhesion promoters, curing accelerators, OH scavengers, drying agents, wetting aids, rheology modifiers, thixotropic agents, processing aids, biocides, UV stabilizers, heat stabilizers, flame retardants, color pigments, odorants, antistatic agents, and/or emulsifiers.

11. The one-component moisture-curable silicone composition as claimed in any of the preceding claims, **characterized in that** the composition is free of oxime compounds.

12. A method for bonding or joining substrates with a one-component composition as claimed in any of claims 1 to 11, comprising
a) the application of the composition to a substrate and contacting of the mixture applied to the substrate with a further substrate in order to obtain an adhesive bond between the substrates, or the introduction of the composition into a gap between two substrates in order to obtain a join between the substrates, and
b) the curing of the mixture,
wherein step b) preferably takes place through the action of atmospheric moisture.

13. The bonded or joined substrates obtainable by a method as claimed in claim 12.

14. A method for improving storage stability and pumpability of a one-component moisture-curable silicone composition, comprising the step of adding between 0.01 wt.-% and 2.0 wt.-%, preferably between 0.1 wt.-% and 1 wt.-%, based on the total composition, of at least one radical scavenger **RS** which is selected from hindered amine light stabilizers that do not contain an N-H group in their molecular structure, to a one-component moisture-curable silicone composition comprising
a) at least one crosslinkable polydiorganosiloxane **P** having alkoxysilane end groups;
b) at least one condensation catalyst **K;**
c) at least one crosslinker **V** having alkoxysilane groups;
d) preferably at least one non-reactive polydiorganosiloxane plasticizer **PL;**
e) optionally further ingredients.

15. The use of a one-component composition as claimed in any of claims 1 to 11 as an adhesive, coating, potting compound, or sealant, particularly in the following sectors: construction, the sanitary sector, the automotive sector, solar power, wind power, white goods, facade and window construction, electronics, and boat- and shipbuilding.
